# EUROPÄISCHE PATENTANMELDUNG

(11) **EP 1 273 911 A1**
(43) Veröffentlichungstag der Anmeldung: **08.01.2003**
(21) Anmeldenummer: 02014281.6
(22) Anmeldetag: 27.06.2002
(51) Int. Cl.: G01N 27/407

(54) **Gasmessfühler**

(30) Priorität: 06.07.2001 DE 10132827
(71) Anmelder: ROBERT BOSCH GMBH, 70442 Stuttgart (DE)
(72) Erfinder: Weyl, Helmut, 71701 Schwieberdingen (DE); Wilde, Juergen, 70736 Fellbach (DE); Pesch, Andreas, 47799 Krefeld (DE)

(57) **Zusammenfassung**

Es wird ein Gasmeßfühler (10) zur Bestimmung der Konzentration oder der Temperatur einer Gaskomponente vorgeschlagen, der in einem Gehäuse (30) ein Sensorelement (21) mit mindestens einer Kontaktfläche (22) aufweist. Die Kontaktfläche ist durch eine in einer Schichtebene des Sensorelements (21) angeordnete Zuleitung mit einer Meßstelle (40) des Sensorelements (21) elektrisch verbunden. Die Kontaktfläche (22) steht in leitender Verbindung mit einem Leiterelement (23), wobei das Leiterelement (23) zwischen der Kontaktfläche (22) und einem Kontakthalter (24, 24a) mittels mindestens eines am Kontakthalter (24, 24a) angreifenden Federelements (25, 25a) eingespannt ist. Der Kontakthalter (24, 24a) ist mit einer Raststufe (27, 165) zur Aufnahme des Federelements (25, 25a) versehen.

## Beschreibung

### Stand der Technik

Die Erfindung geht aus von einem Gasmeßfühler nach dem Oberbegriff des Anspruchs 1.

Ein derartiger Gasmeßfühler ist beispielsweise aus der EP 0 506 897 B1 zum Einsatz in der Abgasanalyse von Verbrennungsmotoren bekannt. Derartige Gasmeßfühler weisen ein metallisches Gehäuse auf, in dem elektrisch isoliert ein längliches, planares Sensorelement mit einem meßseitigen und einem anschlußseitigen Bereich angeordnet ist. Das Sensorelement weist im anschlußseitigen Bereich Kontaktflächen auf, die mit einer im meßseitigen Bereich befindlichen Meßstelle elektrisch verbunden sind. Der Gasmeßfühler weist weiterhin Leiterelemente auf, die in leitender Verbindung mit den Kontaktflächen des Sensorelements stehen und aus dem Gehäuse herausgeführt sind. Die Leiterelemente werden durch ein an zwei einander gegenüberliegenden Kontakthaltern angreifendes Federelement auf die Kontaktflächen gedrückt. Das Federelement ist U-förmig gebogen und wird seitlich, also in einer Richtung senkrecht zur Längsachse des Sensorelements, auf die Kontakthalter geschoben.

Hierbei ist nachteilig, daß das die Kontakthalter umfassende Federelement in Richtung der Längsachse des Sensorelements verrutschen kann. Weiterhin ist der seitliche Einbau des Federelements fertigungstechnisch aufwendig. Die durch den seitlichen Einbau bedingte offene, U-förmige Form des Federelements ist zudem für die wachsenden Anforderungen an die Hochtemperaturbeständigkeit der Kontaktierung des Sensorelements nicht geeignet.

### Vorteile der Erfindung

Der erfindungsgemäße Gasmeßfühler mit den kennzeichnenden Merkmalen des unabhängigen Anspruchs hat gegenüber dem Stand der Technik den Vorteil, daß eine sichere Fixierung des Federelements gewährleistet wird. Hierzu weist ein Kontakthalter eine Raststufe auf, die das Federelement aufnimmt. Die Raststufe ist derart ausgebildet, daß das Federelement bei den im Betrieb des Gasmeßfühlers auftretenden Bedingungen die Raststufe nicht verlassen kann.

Durch die in den Unteransprüchen genannten Maßnahmen sind vorteilhafte Weiterbildungen des im Hauptanspruch angegebenen Gasmeßfühlers möglich.

Dadurch, daß das Federelement in Richtung der Längsachse des Sensorelements über eine Schräge in die Raststufe einbringbar ist, kann die Kontaktiereinrichtung, die die Kontakthalter und das Federelement umfaßt, als Einheit in das Gehäuse des Gasmeßfühlers eingebaut werden. Weiterhin kann das Federelement ringartig geschlossen ausgeführt werden, wodurch sich die Temperaturstabilität des Federelements verbessert und das Federelement einen höheren Anpreßdruck auf den Kontakthalter und das Leiterelement ausüben kann.

In einer besonders bevorzugten Ausführungsform der Erfindung wird die Kontaktiervorrichtung über das Sensorelement geschoben, während sich das Federelement in einer weitere Raststufe befindet. In der weiteren Raststufe kann das Federelement mit einer geringeren Spannung als in der Raststufe aufliegen. Die Kontakthalter sind so geformt, daß sich zwischen den Kontakthaltern bei einem in der weiteren Raststufe befindlichen Federelement ein Zwischenraum ausbildet, der ein einfaches Überschieben der Kontaktiervorrichtung über die Kontaktflächen des Sensorelements erlaubt. Wird das Federelement dann, beispielsweise über eine Schräge, in die Raststufe geschoben, so schließt sich durch einen Kippmechanismus der Zwischenraum zwischen den Kontaktschalen im Bereich der Kontaktflächen des Sensorelements, so daß eine zuverlässige Kontaktierung gewährleistet ist. Die beschriebene Montage der Kontaktiervorrichtung kann in einem Arbeitsschritt erfolgen und ist daher fertigungstechnisch besonders günstig.

### Zeichnung

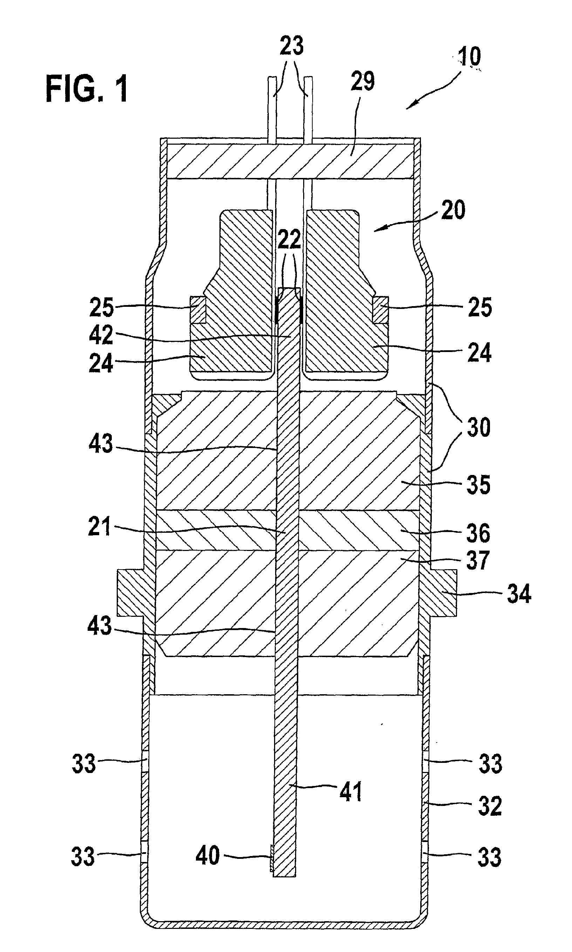

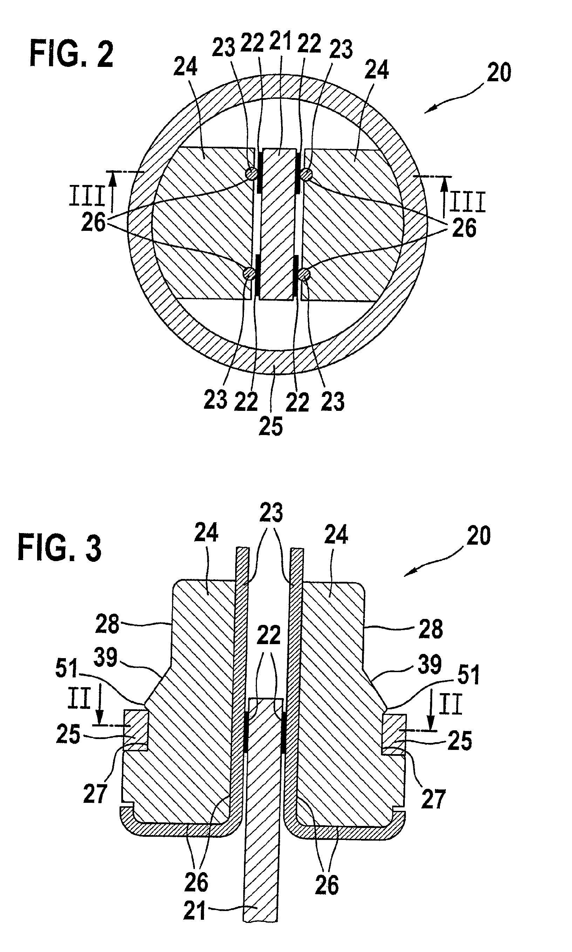

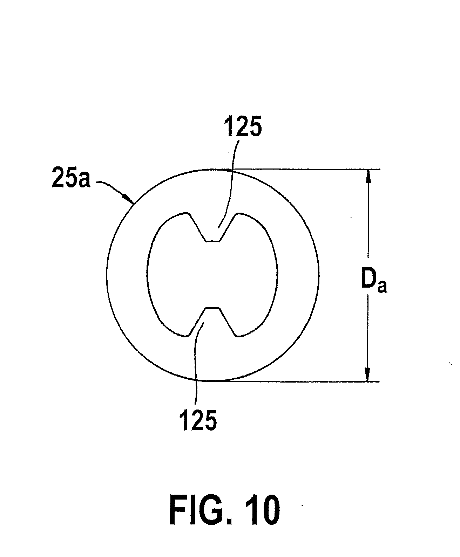

Die Erfindung wird anhand der Zeichnung und der nachfolgenden Beschreibung erläutert. Es zeigen Figur 1 einen Querschnitt durch ein erstes Ausführungsbeispiel eines erfindungsgemäßen Gasmeßfühlers mit einer Kontaktiervorrichtung, Figur 2 einen Schnittdarstellung der Kontaktiervorrichtung nach der Linie II - II in Figur 3, Figur 3 eine Schnittdarstellung der Kontaktiervorrichtung nach der Linie III - III in Figur 2, Figur 4 bis 9 verschiedene Ansichten eines Kontakthalters eines zweiten Ausführungsbeispiels des erfindungsgemäßen Gasmeßfühlers und Figur 10 ein Federelement des zweiten Ausführungsbeispiels des erfindungsgemäßen Gasmeßfühlers.

### Beschreibung der Ausführungsbeispiele

Die Figur 1 zeigt als erstes Ausführungsbeispiel der Erfindung einen Gasmeßfühler 10 mit einem metallischen Gehäuse 30, in dem ein anschlußseitiges und ein meßgasseitiges Keramikformteil 35, 37 angeordnet sind. Die beiden Keramikformteile 35, 37 weisen jeweils einen zueinander fluchtend verlaufenden Durchbruch 43 auf, in dem sich ein plättchenförmiges Sensorelement 21 mit einem meßgasseitigen Endabschnitt 41 und einem anschlußseitigen Endabschnitt 42 befindet. Zwischen dem anschlußseitigen und dem meßgasseitigen Keramikformteil 35, 37 ist ein Dichtelement 36 angeordnet.

Der meßgasseitige Endabschnitt 41 des Sensorelements 21 ragt aus dem Gehäuse 30 heraus und ist von einem Schutzrohr 32 umgeben, das am Gehäuse 30 festgelegt ist. Der Gasmeßfühler 10 ist mittels eines Kragens 34 in einer nicht dargestellten Meßöffnung eines Meßgasraumes, beispielsweise einer Abgasleitung eines Verbrennungsmotors, befestigt. Das zu messende Gas erreicht durch Ein- und Austrittsöffnungen 33 des Schutzrohres 32 eine auf dem meßgasseitigen Endabschnitt 41 des Sensorelements 21 befindliche Meßstelle 40.

Der anschlußseitige Endabschnitt 42 des Sensorelements 21 weist Kontaktflächen 22 auf, für die eine Kontaktiervorrichtung 20 mit Leiterelementen 23, Kontakthaltern 24 und einem Federelement 25 vorgesehen ist. Die Leiterelemente 23 führen aus dem Gehäuse 30 heraus in eine nicht dargestellte Anschlußleitung, die mit einer ebenfalls nicht dargestellten Auswerteelektronik verbunden ist. Das Gehäuse 30 ist anschlußseitig durch eine Scheibe 29 abgeschlossen, die Durchbrüche für die Leiterelemente 23 aufweist.

Die Kontaktflächen 22 des Sensorelements 21 sind durch in einer Schichtebene des Sensorelements 21 angeordnete Zuleitungen (nicht dargestellt) beispielsweise mit Elektroden oder mit einem Heizelement im Bereich der Meßstelle 40 elektrisch verbunden. Eine der Zuleitungen ist auf einer Außenfläche des Sensorelements 21 vorgesehen und mit einer Schutzschicht abgedeckt. Weitere Zuleitungen sind in einer Schichtebene innerhalb des Sensorelements 21 angeordnet und mittels einer Durchkontaktierung mit den Kontaktflächen 22 elektrisch verbunden.

Die Figuren 2 und 3 zeigen in vergrößerter Darstellung den Bereich der Kontaktiervorrichtung 20 des in Figur 1 gezeigten ersten Ausführungsbeispiels der Erfindung. Der anschlußseitige Endabschnitt 42 des Sensorelements 21 weist vier Kontaktflächen 22 auf, von denen jeweils zwei auf den beiden außenliegenden Großflächen des Sensorelements 21 angeordnet sind. Die beiden Kontakthalter 24 der Kontaktiervorrichtung 20 weisen auf der dem Sensorelement 21 zugewandten Seite je zwei Vertiefungen 26 auf, in denen die Leiterelemente 23 angeordnet sind. Mit dem aus den Vertiefungen 26 herausragenden Teil stehen die Leiterelemente 23 in Kontakt zu den jeweiligen Kontaktflächen 22 des Sensorelements 21. Die Leiterelemente 23 werden durch das an den Kontakthaltern 24 angreifende Federelement 25 auf die Kontaktflächen 22 gepreßt.

Das Federelement 25 liegt in einer Raststufe 27 der beiden Kontakthalter 24 und drückt über die Kontakthalter 24 die Leiterelemente 23 auf die jeweiligen Kontaktflächen 22 des Sensorelements 21. Die Raststufe 27 ist in Höhe der Kontaktflächen 22 angeordnet, das heißt, die Kontaktflächen 22 liegen zumindest bereichsweise im Inneren des in der Raststufe 27 befindlichen ringförmigen Federelements 25. Die Kontakthalter 24 weisen eine weitere Raststufe 28 auf, in der das Federelement 25 ohne Vorspannung oder mit geringerer Vorspannung als in der Raststufe 27 aufliegt und von der aus das Federelement 25 über eine Schräge 39 und eine Rasterhebung 51 auf die Raststufe 27 geschoben werden kann.

Zur Montage werden zunächst die Kontakthalter 24 mit dem in der weiteren Raststufe 28 befindlichen Federelement 25 über das Sensorelement 21 geschoben. Die Leiterelemente 23 können dabei bereits in den Vertiefungen 26 angeordnet sein. Ebenso ist denkbar, die Leiterelemente 23 in einem nächsten Schritt in die Vertiefungen 26 einzubringen. Sodann wird das Federelement 25 von der weiteren Raststufe 28 in die Raststufe 27 geschoben und damit die Leiterelemente 23 durch das an den Kontakthaltern 24 angreifende Federelement 25 auf die Kontaktflächen 22 gepreßt.

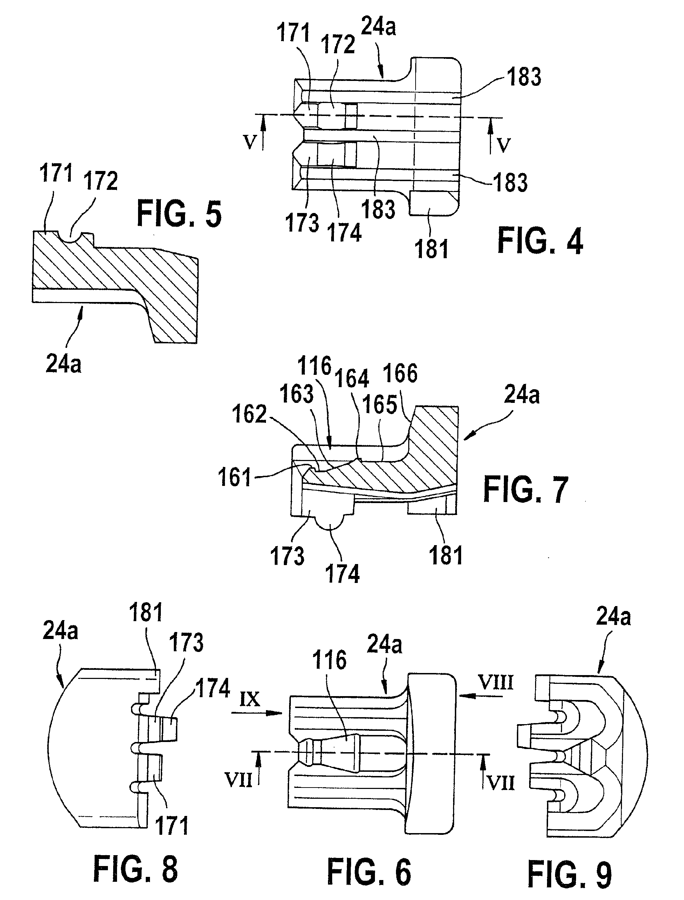

Die Figuren 4 bis 10 zeigen ein zweites Ausführungsbeispiel der Erfindung, das sich von dem ersten Ausführungsbeispiel in der Gestaltung von Kontakthalter 24a (Figuren 4 bis 9) und Federelement 25a (Figur 10) unterscheidet.

Das in Figur 10 dargestellte Federelement 25a ist ein ringförmig geschlossenes gestanztes Scheibenteil mit einer im Querschnitt im wesentlichen H-förmigen Öffnung, das zwei einwärts gerichtete Zungen 125 aufweist. Wird das Federelement 25a über die Kontakthalter 24a geschoben, so werden die Zungen 125 entgegen der Aufschubrichtung weggebogen. Gleichzeitig wölbt sich das scheibenförmige Federelement 25a, wobei die Konkavseite der gewölbten Scheibe in Aufschubrichtung weist.

Die Figur 4 zeigt die dem zu halternden Sensorelement 21 (nicht dargestellt) zugewandte Seite des Kontakthalters 24a. Die entgegengesetzte Seite des Kontakthalters 24a ist in Figur 6 dargestellt. Die Figuren 8 und 9 zeigen die beiden Stirnseiten des Kontakthalters 24a, und die Figuren 5 und 7 zeigen Schnittbilder entsprechend den Schnittlinien V-V in Figur 4 beziehungsweise VII-VII in Figur 6.

Wie insbesondere aus den Figuren 6 und 7 ersichtlich ist, besitzt der Kontakthalter 24a auf seiner Außenseite eine axiale Furche 116, in die das Federelement 25a mit einer seiner Zungen 125 eingreift. Der Boden der Furche 116 besitzt an dem in den Figuren 6 und 7 linken Ende des Kontakthalters 24a eine erste Rasterhebung 161, an die sich nach rechts eine erste Raststufe 162 anschließt. Diese geht nach rechts in eine Schräge 163 über, an die eine zweite Rasterhebung 164 sowie eine dahinter liegende zweite Raststufe 165 anschließen.

Wenn also das Federelement 25a der Figur 10 mit seinen Zungen 125 über die erste Rasterhebung 161 hinweg auf die erste Raststufe 162 geschoben wird, nimmt das Federelement 25a eine erste Rastlage ein. Bei weiterer Verschiebung des Federelementes 25a in den Figuren 6 und 7 nach rechts werden die Zungen 125 - unter zunehmender Verbiegung der Zungen 125 sowie des gesamten Federelements 25a - über die Schräge 163 sowie die zweite Rasterhebung 164 hinweg in eine stark verspannte zweite Rastlage gebracht, in der die Zungen 125 gegen die zweite Raststufe 165 gespannt sind und das ringscheibenförmige Federelement 25a an einer Anschlagfläche 166 des Kontakthalters 24a anliegt.

Eine Besonderheit des in den Figuren 4 bis 9 dargestellten Kontakthalters 24a besteht darin, daß dieser zusammen mit einem gleichartigen Kontakthalter 24a ein zur Aufnahme des Sensorelements 21 geeignetes Maul bildet, mit dem das Sensorelement 21 zangenartig erfaßt werden kann.

Hierzu besitzt der Kontakthalter 24a gemäß den Figuren 4, 5 und 7 an seinem in der Zeichnung linken Ende einen Vorsprung 171 mit einer im Querschnitt etwa halbkreisförmigen Aussparung 172 sowie einen weiteren Vorsprung 173 mit einer zur Aussparung 172 gegengleichen Erhebung 174.

Bei paarweiser Anordnung des in den Figuren 4 bis 9 dargestellten Kontakthalters 24a nimmt die Aussparung 172 des einen Andruckkörpers die Erhebung 174 des anderen Andruckkörpers und umgekehrt auf. Die Vorsprünge 171 und 173 mit ihren Aussparungen 172 beziehungsweise Erhebungen 174 bilden damit ein "Kiefergelenk", welches durch das Federelement 25a der Figur 10 zusammengehalten wird, wenn dessen Zungen 125 auf den Rastflächen der ersten Raststufen 162 sitzen.

Am in den Figuren 4 und 7 rechten Ende des Kontakthalters 24a ist ein seitlicher Vorsprung 181 angeordnet, welcher auch in den Ansichten der Figuren 8 und 9 sichtbar ist. Wenn also zwei Kontakthalter 24a der in den Figuren 4 bis 9 dargestellten Art paarweise unter Bildung des vorgenannten Kiefergelenkes angeordnet werden, ist der seitliche Vorsprung 181 jedes Kontakthalters 24a gegen einen gegenüberliegenden flachen Bereich ohne Vorsprung am anderen Kontakthalter 24a gerichtet.

Die Vorsprünge 171, 173, 181 und die Aussparungen 172 und Erhebungen 174 sind derart gestaltet, daß die Kontakthalter 24a bei einer Verschiebung des Federelements 25a von der ersten Raststufe 162 in die zweite Raststufe 165 gegeneinander eine Kippbewegung ausführen. Liegt das Federelement 25a in der ersten Raststufe 162, so ist der Abstand der beiden Kontakthalter 24a auf der dem Sensorelement 21 zugewandten Seite so groß, daß sich das Sensorelement 21 zwischen die Kontakthalter 24a und die in den Aussparungen 183 angeordneten Leiterelemente 23 einschieben läßt. Wird das Federelement 25a in die zweite Raststufe 165 geschoben, so werden die Leiterelemente 23 durch eine Kippbewegung der Kontakthalter 24a auf die Kontaktflächen 22 des Sensorelements 21 gepreßt.

Zur Montage werden demnach zunächst die Kontakthalter 24a mit dem in der ersten Raststufe 162 befindlichen Federelement 25a über das Sensorelement 21 geschoben. Die Leiterelemente 23 können dabei bereits in den Aussparungen 183 angeordnet sein. Ebenso ist denkbar, die Leiterelemente 23 in einem nächsten Schritt in die Aussparungen 183 einzubringen. Sodann wird das Federelement 25a von der ersten Raststufe 162 in die zweite Raststufe 165 geschoben und somit die Leiterelemente 23 durch das an den Kontakthaltern 24a angreifende Federelement 25a auf die Kontaktflächen 22 des Sensorelements 21 gepreßt.

Die Erfindung läßt sich ebenso auf Kontaktiervorrichtungen mit Federelementen übertragen, die eine andere Form als in den beschriebenen Ausführungsbeispielen aufweisen.

## Patentansprüche

1. Gasmeßfühler (10), insbesondere Meßfühler zur Bestimmung der Konzentration oder der Temperatur einer Gaskomponente, mit einem in einem Gehäuse (30) angeordneten Sensorelement (21), das mindestens eine Kontaktfläche (22) aufweist, die durch eine in mindestens einer Schichtebene des Sensorelements (21) angeordnete Zuleitung mit einer Meßstelle (40) des Sensorelements (21) elektrisch verbunden ist, wobei die Kontaktfläche (22) in leitender Verbindung mit einem Leiterelement (23) steht und wobei das Leiterelement (23) zwischen der Kontaktfläche (22) und einem Kontakthalter (24, 24a) mittels mindestens eines am Kontakthalter (24, 24a) angreifenden Federelements (25, 25a) eingespannt ist, **dadurch gekennzeichnet, daß** der Kontakthalter (24, 24a) mit einer Raststufe (27, 165) zur Aufnahme des Federelements (25, 25a) versehen ist.

2. Gasmeßfühler nach Anspruch 1, **dadurch gekennzeichnet, daß** der Kontakthalter (24, 24a) eine weitere Raststufe (28, 162) aufweist, in der das Federelement (25, 25a) ohne Vorspannung oder mit geringerer Vorspannung als in der Raststufe (27, 165) aufliegen kann.

3. Gasmeßfühler nach Anspruch 2, **dadurch gekennzeichnet, daß** der Kontakthalter (24, 24a) eine Schräge (39, 163) aufweist, die zwischen der Raststufe (27, 165) und der weiteren Raststufe (28, 162) angeordnet ist.

4. Gasmeßfühler nach Anspruch 2 oder 3, **dadurch gekennzeichnet, daß** das Federelement (25, 25a) in einer Richtung parallel zur Längsachse des Sensorelements (21) von der weiteren Raststufe (28, 162) in die Raststufe (27, 165) geschoben werden kann.

5. Gasmeßfühler nach mindestens einem der vorhergehenden Ansprüche, **dadurch gekennzeichnet, daß** zur Kontaktierung des Sensorelements (21) zwei einander gegenüberliegend angeordnete Kontakthalter (24, 24a) vorgesehen sind, zwischen denen das Sensorelement (21) und die zur Kontaktierung der Kontaktflächen (22) des Sensorelements (21) vorgesehenen Leiterelemente (23) angeordnet sind.

6. Gasmeßfühler nach mindestens einem der vorhergehenden Ansprüche, **dadurch gekennzeichnet, daß** bei einem in der weiteren Raststufe (28, 162) befindlichen Federelement (25, 25a) zwischen den Kontakthaltern (24, 24a) ein Zwischenraum ausgebildet ist, der das Einschieben des Sensorelements (21) in den Zwischenraum zwischen den Kontakthaltern (24, 24a) erlaubt.

7. Gasmeßfühler nach mindestens einem der vorhergehenden Ansprüche, **dadurch gekennzeichnet, daß** das Federelement (25, 25a) ringartig geschlossen ist.

8. Verfahren zur Herstellung des Gasmeßfühlers (10) nach mindestens einem der vorhergehenden Ansprüche, wobei zwei einander gegenüberliegend angeordnete Kontakthalter (24, 24a) vorgesehen sind, die durch ein Federelement (25, 25a) gegeneinander und/oder gegen das Sensorelement (21) eingespannt sind, **dadurch gekennzeichnet, daß** die Kontakthalter (24, 24a) auf das Sensorelement (21) aufgesetzt werden, und daß danach das Federelement (25, 25a) in die Raststufen (27, 165) der Kontakthalter (24, 24a) geschoben wird.

9. Verfahren nach Anspruch 8, **dadurch gekennzeichnet, daß** das Federelement (25, 25a) beim Aufsetzen der Kontakthalter (24, 24a) auf das Sensorelement (21) in den weiteren Raststufen (28, 162) angeordnet ist, daß die Leiterelemente (23) zwischen den Kontakthalter (24, 24a) und das Sensorelement (21) angeordnet werden, und daß das Federelement (25, 25a) anschließend über die Schräge (39, 163) in die Raststufen (27, 165) geschoben wird, wodurch sich der Abstand der beiden Kontakthalter (24, 24a) im Bereich der Kontaktflächen (22) des Sensorelements (21) durch eine Kippbewegung der Kontakthalter (24, 24a) vermindert und die Leiterelemente (23) auf die Kontaktflächen (22) des Sensorelements (21) gedrückt werden.
